**Europäisches Patentamt**

**European Patent Office**

**Office européen des brevets**

(11) Veröffentlichungsnummer: **0 172 436**

A2

# (12) EUROPÄISCHE PATENTANMELDUNG

(21) Anmeldenummer: 85109283.3

(22) Anmeldetag: 24.07.85

(51) Int. Cl.⁴: **B 29 B 7/92**
**B 29 C 47/76**

(30) Priorität: 31.07.84 DE 3428119

(43) Veröffentlichungstag der Anmeldung:
26.02.86 Patentblatt 86/9

(84) Benannte Vertragsstaaten:
BE DE FR GB IT

(71) Anmelder: Elastogran GmbH
Postfach 1140
D-2844 Lemförde(DE)

(72) Erfinder: Welz, Martin
Kaiserslauterer Strasse 231
D-6702 Bad Duerkheim(DE)

(72) Erfinder: Vogel, Helmut
Helmkaemper Ort 18
D-4550 Bramsche 8(DE)

(74) Vertreter: Kinzel, Klaus, Dr.
BASF Aktiengesellschaft Patentabteilung
Carl-Bosch-Strasse 38
D-6700 Ludwigshafen(DE)

(54) Verfahren zur Herstellung von Bahnen aus holzmehlgefülltem Polypropylen.

(57) Die Erfindung betrifft ein Verfahren zur Herstellung von Bahnen aus holzmehlgefülltem Polypropylen durch Eintragen von Holzmehl, welches einen Wassergehalt von 2 bis 10 Gew.% und eine mittlere Teilchengröße von weniger als 100 μm aufweist, in einem Polypropylen-Schmelzestrom, Abziehen der flüchtigen Anteile mittels zweier Entgasungsstutzen, von denen einer vor und einer hinter der Eintrittsstelle des Holzmehls angeordnet ist, Abkühlen und Verfestigen. Die entstandene warmverformbaren Bahnen können zu Kraftfahrzeugteilen weiterverarbeitet werden.

Elastogran GmbH

## Verfahren zur Herstellung von Bahnen aus holzmehlgefülltem Polypropylen

Die Erfindung betrifft ein Verfahren zur Herstellung von Bahnen aus holzmehlgefülltem Polypropylen durch Einmischen von Holzmehl mit einem Wassergehalt von 2 bis 10 Gew.% in eine Polypropylenschmelze.

In der DE-A-1 769 178 sind Formmassen aus Olefinpolymerisaten, z.B. Polypropylen, und feinteiligem Holz beschrieben. Zu ihrer Herstellung können die Komponenten u.a. in einen Extruder eingegeben und bei erhöhter Temperatur vermischt werden. Das Holzmehl soll einen Wassergehalt von weniger als 1 Gew.% aufweisen. Solches trockenes Holzmehl kann zwar verhältnismäßig unproblematisch mit Polypropylen vermischt werden, es muß jedoch in einem aufwendigen Verfahrensschritt getrocknet und wegen seiner hygroskopen Eigenschaften trocken gelagert werden.

Bei dem in der DE-C-24 12 538 beschriebenen Verfahren zur Herstellung von Platten aus holzgefülltem Polypropylen werden Holzsägespäne mit einem Wassergehalt von 6 ± 2 Gew.% eingesetzt. Es werden Aggregate aus Holzspänen und Polypropylenpulver hergestellt, aus denen die flüchtigen Anteile vor dem Aufschmelzen des Polypropylens austreten können. Der Teilchengrößenbereich der Holzsägespäne liegt zwischen 100 und 4000 µm; derart grobe Füllstoffe wirken als Fehlstellen im fertigen Formteil und vermindern dessen Festigkeit.

In der DE-A-27 57 258 sind ebenfalls holzmehlgefüllte thermoplastische Formmassen beschrieben, die zum Binden der Zersetzungsprodukte des Holzes mit einem Stabilisator versetzt sind. Es sind mehrere Methoden zur Herstellung der Formmassen angegeben, u.a. eine Ausführungsform, bei der die Komponenten in einen Extruder, gegebenenfalls mit Entgasungsvorrichtung, eingegeben werden, auf Temperaturen oberhalb der Schmelztemperatur des Thermoplasten erhitzt und homogen vermischt werden. Im Falle von Polypropylen müssen dabei Temperaturen oberhalb von 200°C angewandt werden. Das Aufschmelzen des Polypropylens dauert verhältnismäßig lang, dabei tritt eine starke thermische Schädigung des Holzes ein. Dies führt zu einer Verfärbung und zu einem unangenehmen Geruch der Formteile, was auch durch größere Mengen an Stabilisator nicht unterdrückt werden kann.

Der Erfindung lag also die Aufgabe zugrunde, ein Verfahren zum homogenen Vermischen von Polypropylen und Holzmehl zu entwickeln, mit dem ohne großen Aufwand aus feuchtem Holzmehl geruchsfreie und blasenfreie Bahnen mit geringer Verfärbung und hoher Festigkeit hergestellt werden können. Polypropylen im Sinne der Erfindung sind Homopolymerisate des Propylens und Copolymerisate mit untergeordneten Mengen an Comonomeren, z.B. Ethylen, Buten, Acrylsäure, Acrylsäureester oder Vinylester. Es werden be-

Dd/St

vorzugt leichtfließende Polymerisate eingesetzt, z.B. mit einem Schmelzindex zwischen 10 und 40 g/10 min, gemessen nach ASTM D 1238 - 65 T bei einer Temperatur von 230°C und einem Auflagegewicht von 2,16 kg.

Als Holzmehl wird vorzugsweise das Sägemehl eingesetzt, das bei der Verarbeitung von Weichholz, z.B. Fichte oder Tanne, direkt anfällt. Es weist einen Wassergehalt von 2 bis 10, vorzugsweise 4 bis 8 und insbesondere 5 bis 6 Gew.% auf. Seine mittlere Teilchengröße (Gewichtsmittel) $d_{50}$ ist im allgemeinen geringer als 100 µm; vorzugsweise liegt die Teilchengröße zwischen 50 und 95 µm. Die Menge des Holzmehls in der Gesamtmischung beträgt 10 bis 50 Gew.%, vorzugsweise 25 bis 45 Gew.%.

Darüber hinaus können übliche Zusatzstoffe, wie Pigmente, z.B. Ruß, Farbstoffe, Stabilisatoren, z.B. Magnesiumoxid oder Calciumcarbonat, sowie Elastifizierungsmittel, wie z.B. EPDM-Kautschuk, zugemischt werden.

Bei dem erfindungsgemäßen Verfahren wird zunächst ein Polypropylen--Schmelzstrom hergestellt. Dies geschieht zweckmäßigerweise in einem Extruder, z.B. einem Zweiwellenextruder, wo durch hohe Scherbeanspruchung Polypropylengranulat, welches gegebenenfalls Zusatzstoffe enthält, aufgeschmolzen wird. Dabei wird zweckmäßigerweise eine Temperatur von 200 bis 300°C, vorzugsweise von 230 bis 280°C eingestellt. In diesen Schmelzestrom wird kontinuierlich Holzmehl eingetragen, zweckmäßigerweise mittels eines Seitenextruders. Die getrennte Zufuhr von Polypropylen und Holzmehl hat den Vorteil, daß die Masseströme unabhängig voneinander geführt werden können, denn nur so wird über eine geeignete Meß- und Regeltechnik eine betriebssichere Durchführung des Verfahrens möglich.

Flüchtige Anteile, wie z.B. eingeschleuste Luft, Wasserdampf, der durch Verdampfen des Feuchtigkeitsgehalts des Holzmehls entstanden ist, sowie geringe Mengen Zersetzungsprodukte des Holzes, wie Essigsäure, Methanol und Aceton, müssen entfernt werden. Dies geschieht zweckmäßigerweise in mehreren Stufen: Unmittelbar in Produktstromrichtung vor der Eintrittstelle des Holzmehls ist ein Entgasungsstutzen am Extruder angebracht, aus dem bei Atmosphärendruck ein Großteil der eingeschleusten Luft, zusammen mit Wasserdampf und einer geringen Menge Holzmehl entweichen kann. Hinter der Eintrittsstelle des Holzmehls ist ein zweiter Entgasungsstutzen angebracht. Hier werden bei vermindertem Druck, vorzugsweise bei 50 bis 500 mbar, insbesondere bei 100 bis 150 mbar die Hauptmenge des Wasserdampfes sowie die gebildeten Zersetzungsprodukte des Holzes abgezogen. Der Wassergehalt des Holzes ist insofern von Vorteil als durch das sehr schnell verdampfende Wasser eine Blasenbildung in der Polypropylenschmelze stattfindet, welche zu einer guten Zerteilung der Holzmehlaggregate und damit zu einer homogenen Vermischung führt. Die Vielzahl der sich bildenden Dampfblasen bewirkt eine für das Entgasungsergebnis wesentliche Vergrößerung der Schmelzeoberfläche, so daß in Verbindung mit Wasserdampf andere flüchtige Bestandteile und Zersetzungsprodukte entfernt werden. Durch das eingebrachte Holzmehl und infolge der Verdampfung des Wassers sinkt die Temperatur der Polypropylenschmelze um etwa 20 bis 40°C ab. Vor dem Auspressen aus dem Extruder wird sie dadurch auf 200 - 240°C abgekühlt. Nach dem Auspressen durch eine Breitschlitzdüse verfestigt sie sich zu Bahnen, welche zweckmäßigerweise 20 bis 200 cm breit und 0,1 bis 1 cm dick sind. Sie können durch Biegen, Pressen oder Tiefziehen zu Fertigteilen warm verformt werden, die z.B. im Kraftfahrzeugsektor Anwendung finden.

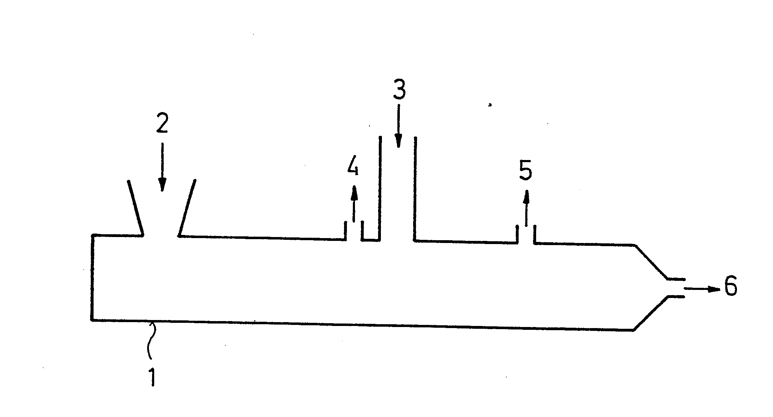

Die im Beispiel verwendeten Bezugszahlen erläutern die Zeichnung.

Beispiel

Im Einzugsteil 2 eines Zweiwellenextruders 1 (l:d-Verhältnis 34,1 : 1) werden pro Stunde 425 kg Polypropylen mit einem Schmelzindex von 12 g/10 min zugegeben. Das Polypropylen wird durch Scher- und Knetelemente aufgeschmolzen, so daß sich eine Massetemperatur von etwa 270°C einstellt. Durch einen Einwellen-Seitenextruder 3 werden pro Stunde 250 kg Fichtenholzmehl mit einem Wassergehalt von 6 Gew.% und einer mittleren Teilchengröße von 70 µm zugegeben. Die miteingeschleuste Luft entweicht durch den Entgasungsstutzen 4, der unmittelbar vor der Eintrittsstelle des Holzmehls angebracht ist; der gebildete Wasserdampf wird bei einem Unterdruck von 130 mbar am Entgasungsstutzen 5 abgezogen. Die Schmelze wird auf etwa 230°C abgekühlt und durch die Breitschlitzdüse 6 ausgepreßt. Sie verfestigt sich zu einer Bahn von 145 cm Breite und 0,23 cm Dicke.

Elastogran GmbH — 4 — O.Z. 0190/02069

0172436

## Patentansprüche

1. Verfahren zur Herstellung von Bahnen aus holzmehlgefülltem Polypropylen durch Vermischen von Polypropylen mit 10 bis 50 Gew.%, bezogen auf das Gemisch, Holzmehl, welches einen Wassergehalt von 2 bis 10 Gew.% aufweist, dadurch gekennzeichnet, daß man in einen Polypropylen-Schmelzestrom kontinuierlich Holzmehl einträgt, flüchtige Anteile abzieht, die Mischung auspreßt und durch Abkühlen verfestigt.

2. Verfahren nach Anspruch 1, dadurch gekennzeichnet, daß das Holzmehl eine mittlere Teilchengröße (Gewichtsmittel) $d_{50}$ von weniger als 100 µm aufweist.

3. Verfahren nach Anspruch 1, dadurch gekennzeichnet, daß zur Entfernung der flüchtigen Anteile in einer ersten Stufe unmittelbar vor der Eintrittsstelle des Holzmehls bei Atmosphärendruck und in einer zweiten Stufe hinter der Eintrittsstelle des Holzmehls bei vermindertem Druck abgezogen wird.

Zeichn.

St0010